# EUROPEAN PATENT APPLICATION

(11) **EP 3 981 843 A1**
(43) Date of publication of application: **13.04.2022**
(21) Application number: 20819105.6
(22) Date of filing: 01.06.2020
(51) Int. Cl.: C09D 5/14, C09D 5/16, C09D 133/04, C09D 201/00

(54) **ANTIFOULING COATING COMPOSITION**

(30) Priority: 06.06.2019 JP 2019106529
(71) Applicant: Nitto Kasei Co., Ltd., Osaka-shi Osaka 533-0031 (JP)
(72) Inventor: WAKU, Hidenori, Osaka-shi, Osaka 533-0031 (JP); MATSUKI, Takashi, Osaka-shi, Osaka 533-0031 (JP); KOBAYASHI, Satoshi, Osaka-shi, Osaka 533-0031 (JP); YASUI, Takuya, Osaka-shi, Osaka 533-0031 (JP); ITO, Motomichi, Osaka-shi, Osaka 533-0031 (JP)
(74) Representative: Gulde & Partner
(86) International application number: PCT/JP2020/021649
(87) International publication number: WO 2020/246432

(57) **Abstract**

An antifouling coating composition which can reduce viscosity without increasing the amount of organic solvent and can form a coating film having superior long-term antifouling property is provided. An antifouling coating composition, including: a copper-containing substance (A) and 4,5-dichloro-2-octyl-4-isothiazolin-3-one; wherein: a copper content in solids of the antifouling coating composition is 21 mass% or less is provided.

## Description

### TECHNICAL FIELD

The present invention relates to an antifouling coating composition.

### BACKGROUND

There has been a problem that aquatic fouling organisms such as barnacles, tubeworms, common mussels, *Bugula neritina* sea squirts, green laver, sea lettuce, slime and the like adhere onto ships (especially ship bottom), fishing tools such as fishing nets and fishing net accessories, and underwater structures such as power generation plant conduit, resulting in degradation of the function of such ships and the like, or degraded appearance.

In order to prevent such problems, there has been a technique to apply an antifouling coating composition onto ships and the like to form an antifouling coating film. Controlled release of an antifouling agent from the antifouling coating film allows to exhibit antifouling property for a long period of time (Patent Literature 1).

### CITATION LIST

### PATENT LITERATURE

[Patent Literature 1] JP-A-2000-17203
[Patent Literature 2] WO 2005/005516
[Patent Literature 3] JP-A-2005-082725

### SUMMARY OF INVENTION

### TECHNICAL PROBLEM

In recent years, fouling by marine organisms has become extremely severe due to large change in the marine environment, such as the rise in seawater temperature. In addition, Osaka Bay, Tokyo Bay, and Ise Bay, where nutrient-rich water flows in from rivers, fouling by barnacles and other organisms is very severe. Further, since the pH of seawater is lowered due to freshwater flowing in from rivers, the solubility of the antifouling coating film is reduced. Accordingly, the amount of chemical released becomes insufficient. Therefore, even when the technique of Patent Literature 1 is adopted, long term static antifouling property cannot be maintained, which can be problematic.

In addition, in recent years, due to environmental concerns, solvent-based coatings have been regulated worldwide since they volatilize many organic solvents into the air. Patent Literatures 2 and 3 have attempted to reduce the content of organic solvents. However, with these methods, the coating viscosity is too high, making the application process difficult.

The present invention has been made by taking the afore-mentioned problems into consideration. The present invention provides an antifouling coating composition which can reduce viscosity without increasing the amount of organic solvent, and can form a coating film having superior long term antifouling property.

### SOLUTION TO PROBLEM

According to the present invention, an antifouling coating composition, comprising: a copper-containing substance (A) and 4,5-dichloro-2-octyl-4-isothiazolin-3-one; wherein: a copper content in solids of the antifouling coating composition is 21 mass% or less, is provided.

The present inventors have conducted intensive studies and have found that the antifouling coating composition having the afore-mentioned composition can solve the problems, thereby leading to completion of the present invention.

### MODE FOR CARRYING OUT THE INVENTION

Hereinafter, the present invention will be described in detail.

### 1. Antifouling Coating Composition

The antifouling coating composition of the present invention (hereinafter also referred to as "coating composition") comprises copper-containing substance (A) and 4,5-dichloro-2-octyl-4-isothiazolin-3-one. 4,5-dichloro-2-octyl-4-isothiazolin-3-one is an antifouling agent commercially available as "Sea Nine 211" from Rohm and Haas Company. In the following explanation, the substance is referred to as "Sea Nine", however, the scope of the present invention is not intended to be limited to this particular product.

The copper content in the solids of the coating composition is 21 mass% or less. When the copper content is less, the viscosity tends to become low. By controlling the copper content within 21 mass% or less, viscosity of the coating can be made low without increasing the organic solvent.

The copper content can be calculated by (copper content in coating composition)/(coating composition solids). The copper content in the coating composition represents a ratio of the mass of copper atom with respect to total mass of the coating composition. The mass of copper atom can be calculated by adding up the mass of copper atom of each components contained in the coating composition. The coating composition solids represents a mass of the solids with respect to total mass of the coating composition. The mass of the solids can be obtained by measuring the mass of residue which remain after heating the coating composition under prescribed conditions.

The copper content is, for example, 0.1 to 21 mass%, preferably 1 to 21 mass%, and is particularly for example, 0.1, 0.5, 1, 2, 3, 4, 5, 6, 7, 8, 9, 10, 11, 12, 13, 14, 15, 16, 17, 18, 19, 20, or 21 mass%, and can be in the range between the two values exemplified herein.

### 1-1. Copper-Containing Substance (A)

The copper-containing substance (A) is a substance containing copper, and is a simple substance of copper or a copper compound.

As the copper-containing substance (A) for example, cuprous oxide, cuprous thiocyanate, copper powder, copper pyrithione, copper acetate, copper bromide (I), copper sulfate, hydroxide copper, copper carbonate, copper neodecanoate, copper naphthenate, copper acrylic resin, hydrogenated rosin copper, rosin copper, copper 2-ethylhexanoate, copper trimethylisobutenyl cyclohexenecarboxylate and the like can be mentioned. These copper-containing substance (A) can be used alone, or two or more of these can be used in combination.

The copper-containing substance (A) can be a substance having an antifouling property, or can be a substance not having the antifouling property. Here, the copper-containing substance (A) preferably has the antifouling property.

The copper-containing substance (A) is used in combination with Sea Nine. With such combined use, long-term antifouling property can be improved compared with the case of single use. In addition, copper-containing substance (A) is preferably a substance which forms a complex with Sea Nine. In such case, the long-term antifouling property can be further improved.

The mass ratio of copper-containing substance (A) with respect to Sea Nine is, for example, 0.01 to 100, particularly for example, 0.01, 0.1, 1, 2, 3, 4, 5, 6, 7, 8, 9, 10, 20, 30, 40, 50, 60, 70, 80, 90, or 100, and can be in the range between the two values exemplified herein.

### 1-2. Copolymer (B)

The antifouling coating composition necessarily contains a coating film forming component. When the copper-containing substance (A) is a resin such as copper acrylic resin, the copper-containing substance (A) serves as the coating film forming component. On the other hand, when the copper-containing substance (A) does not serve as the coating film forming component, the antifouling coating composition preferably contains the polymer (B) as the coating film forming component.

The polymer (B) is a homopolymer or a copolymer of one or more of monomer (a) and monomer (b). The polymer (B) is preferably a copolymer of monomer (a) and monomer (b). Monomer (b) is an ethylenically unsaturated monomer other than monomer (a).

### <Monomer (a)>

Monomer (a) is a (meth)acrylic acid tri-organosilyl monomer, represented by general formula (1). 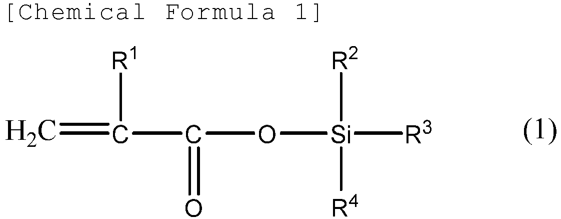 (wherein, R¹ represents hydrogen or methyl group; R², R³, R⁴ are each the same or different from each other and represents branched alkyl group having 3 to 8 carbon atoms or phenyl group)

As the branched alkyl group having 3 to 8 carbon atoms of R² to R⁴, for example, isopropyl group, isobutyl group, s-butyl group, t-butyl group, 1-ethylpropyl group, 1-methylbutyl group, 1-methylpentyl group, 1,1-dimethylpropyl group, 1,1-dimethylbutyl group, texyl group, cyclohexyl group, 1,1-dimethylpentyl group, 1-methylhexyl group, 1,1-dimethylhexyl group, 1-methylheptyl group, 2-methylbutyl group, 2-ethylbutyl group, 2,2-dimethylpropyl group, cyclohexylmethyl group, 2-ethylhexyl group, 2-propylpentyl group, 3-methylpentyl group and the like can be mentioned. The one preferable as R² to R⁴ is isopropyl group, s-butyl group, t-butyl group, phenyl group, and 2-ethylhexyl group. Especially preferable one is isopropyl group and 2-ethylhexyl group.

As the monomer (a), for example, triisopropylsilyl (meth)acrylate, triisobutylsilyl (meth)acrylate, tri-s-butylsilyl (meth)acrylate, triisoamylsilyl (meth)acrylate, tris(2-ethylhexyl)silyl (meth)acrylate, triphenylsilyl (meth)acrylate, diisopropylisobutylsilyl (meth)acrylate, diisopropylisoamylsilyl (meth)acrylate, diisopropyl(2-ethylhexyl)silyl (meth)acrylate, diisopropylphenylsilyl (meth)acrylate, diisopropylcyclohexylsilyl (meth)acrylate, t-butyldiisopropylsilyl (meth)acrylate, t-butyldiisobutylsilyl (meth)acrylate, t-butyldiisoamylsilyl (meth)acrylate, t-butyldiphenylsilyl (meth)acrylate and the like can be mentioned. The monomer (a) is preferably triisopropylsilyl (meth)acrylate. These monomers can be used alone, or two or more of these can be used in combination.

The content of the monomer (a) is, in terms of achieving long-term static antifouling property and avoiding occurrence of coating film defects, 1 to 80 mass% with respect to total mass of the monomer (a) and monomer (b), particularly preferably 20 to 70 mass%. The content of the monomer (a) is, particularly for example, 1, 5, 10, 20, 30, 40, 50, 60, 70, or 80 mass%, and can be in the range between the two values exemplified herein.

### <Ethylenically Unsaturated Monomer (b)>

The monomer (b) is an ethylenically unsaturated monomer other than the monomer (a), and (meth)acrylic ester, vinyl compound, aromatic compound, dialkyl ester compound of dibasic acid can be mentioned for example.

As the (meth)acrylic ester, for example, methyl (meth)acrylate, ethyl (meth)acrylate, butyl (meth)acrylate, isobutyl (meth)acrylate, t-butyl (meth)acrylate, 2-ethylhexyl (meth)acrylate, lauryl (meth)acrylate, 2-methoxyethyl (meth)acrylate, 2-methoxypropyl (meth)acrylate, 4-methoxybutyl (meth)acrylate, benzyl (meth)acrylate, phenyl (meth)acrylate, 2-ethoxyethyl (meth)acrylate, 2-(2-ethoxyethoxy)ethyl (meth)acrylate, propylene glycol monomethyl (meth)acrylate, 2-hydroxyethyl (meth)acrylate, 2-hydroxypropyl (meth)acrylate, glycidyl (meth)acrylate, furfuryl (meth)acrylate, tetrahydrofurfuryl (meth)acrylate, dimethylaminoethyl (meth)acrylate, diethylaminoethyl (meth)acrylate,
2-[2-(2-hydroxyethoxy)ethoxy]ethoxy ethyl methacrylate, mono(2-(meth)acryloyloxyethyl) amberate, N-(3-dimethylaminopropyl) (meth)acrylamide, 2-[2-(2-methoxyethoxy)ethoxy]ethyl (meth)acrylate, N,N'-dimethyl(meth)acrylamide, 2-(2-methoxyethoxy)ethyl (meth)acrylate, (meth)acrylic acid, hydroxypropyl acrylate, 2-(acetoacetyloxy)ethyl methacrylate, 2-(2-hydroxyethoxy)ethyl methacrylate, N-vinyl-2-pyrrolidone, 2-[2-(2-ethoxyethoxy)ethoxy]ethyl acrylate,
esters of acrylic acid such as 4-hydroxybutylacrylate glycidyl ether, N-isopropylacrylaminde, 2-(dimethylamino)ethyl acrylate, 2-(2-ethoxyethoxy)ethyl acrylate, 4-hydroxybutyl acrylate, tetrahydrofurfuryl acrylate, 3-chloro-2-hydroxypropyl acrylate, 2-[2-(2-ethoxyethoxy)ethoxy]ethyl methacrylate, N,N'-diethylacrylamide, 3-methoxybutyl acrylate can be mentioned for example.

As the vinyl compound, for example, vinyl compound having functional group such as vinyl chloride, vinylidene chloride, acrylonitrile, methacrylonitrile, vinyl acetate, vinyl benzoate, vinyl butyrate, butyl vinyl ether, lauryl vinyl ether, N-vinyl pyrrolidone and the like can be mentioned.

As the aromatic compound, for example, styrene, vinyl toluene, α-methyl styrene and the like can be mentioned.

As the dialkyl ester compound of dibasic acid, dimethyl maleate, dibutyl maleate, dimethyl fumarate and the like can be mentioned.

In the present invention, these monomers (b) can be used alone, or two or more of these can be used in combination. Particularly, as the monomer (b), in terms of coating film property, (meth)acrylic ester is preferable. Further, in terms of crack resistance, methyl methacrylate, butyl (meth)acrylate, isobutyl (meth)acrylate, t-butyl (meth)acrylate, 2-ethylhexyl (meth)acrylate, 2-methoxyethyl (meth)acrylate, 2-ethoxyethyl (meth)acrylate, 2-(2-ethoxyethoxy)ethyl (meth)acrylate, 2-hydroxyethyl (meth)acrylate, glycidyl (meth)acrylate, furfuryl (meth)acrylate, tetrahydrofurfuryl (meth)acrylate and the like are more preferable.

### <Synthesis of Polymer (B)>

Polymer (B) can be obtained by polymerizing monomer including one or more of monomer (a) and monomer (b). The polymerization can be performed in the presence of a polymerization initiator for example.

The weight average molecular weight (Mw) of the polymer (B) is preferably 5,000 to 300,000. When the molecular weight is less than 5,000, the coating film of the antifouling coating would become brittle, thereby prone to peeling and cracking. When the molecular weight exceeds 300,000, the viscosity of the polymer solution would increase, and may handling can become difficult. Mw is, particularly for example, 5,000, 10,000, 20,000, 30,000, 40,000, 50,000, 60,000, 70,000, 80,000, 90,000, 100,000, 200,000, or 300,000, and can be in the range between the two values exemplified herein.

When the polymer (B) is a copolymer, the copolymer can be any one of random copolymer, alternating copolymer, periodic copolymer, and block copolymer of monomer (a) and monomer (b).

As the polymerization initiator, for example, azo compounds such as 2,2'-azobisisobutyronitrile, 2,2'-azobis(2-methylbutyronitrile), 2,2'-azobis(2,4-dimethylvaleronitrile), dimethyl-2,2'-azobisisobutyrate, dimethyl-2,2'-azobisisobutyrate, and 2,2'-azobis(N-butyl-2-methylpropionamide); peroxides such as benzoyl peroxide, di-tert-butyl peroxide, tert-butyl peroxy benzoate, tert-butyl peroxy isopropyl carbonate, t-butyl peroxy-2-ethyl hexanoate, t-hexyl peroxy-2-ethyl hexanoate, di-t-hexyl peroxide, t-butyl peroxy-2-ethyl hexyl monocarbonate, di-t-butyl peroxide, 1,1,3,3-tetramethylbutyl peroxy neodecanoate, t-amyl peroxy neodecanoate, t-hexyl peroxy pivalate, t-amyl peroxy pivalate, and 1,1,3,3-tetramethylbutyl peroxy-2-ethyl hexanoate can be mentioned. These polymerization initiators can be used alone, or two or more of these can be used in combination. As the polymerization initiator, 2,2'-azobisisobutyronitrile, 2,2'-azobis(2-methylbutyronitrile), 2,2'-azobis(2,4-dimethylvaleronitrile), dimethyl-2,2'-azobisisobutyrate, and 1,1,3,3-tetramethylbutyl peroxy-2-ethyl hexanoate are particularly preferable. Molecular weight of the polymer (B) can be adjusted by arbitrarily setting the amount of the polymerization initiator used.

As the polymerization method, for example, solution polymerization, bulk polymerization, emulsion polymerization, suspension polymerization, and non-aqueous dispersion polymerization can be mentioned. Among these, solution polymerization and non-aqueous dispersion polymerization are particularly preferable in terms of obtaining the polymer easily and precisely.

In the polymerization reaction, an organic solvent can be used as necessary. As the organic solvent, for example, aromatic hydrocarbon based solvent such as xylene, ethylbenzene, toluene and the like; aliphatic hydrocarbon based solvent such as hexane, heptane, mineral spirit and the like; ester based solvent such as ethyl acetate, butyl acetate, isobutyl acetate, methoxypropyl acetate, 2-methoxy-1-methylethyl acetate and the like; alcohol based solvent such as ethanol, isopropyl alcohol, butyl alcohol, 1-methoxy-2-propanol and the like; ether based solvent such as dioxane, diethylether, dibutylether and the like; ketone based solvent such as methyl ethyl ketone, methyl isobutyl ketone, cyclohexanone and the like can be mentioned. Among these, aromatic hydrocarbon based solvent is preferable, and xylene is more preferable. These solvents can be used alone, or two or more of these can be used in combination.

The reaction temperature of the polymerization reaction can be arbitrarily set depending on the kind of the polymerization initiator. The reaction temperature is usually 50 to 170°C, preferably 60 to 150°C. The reaction time of the polymerization reaction can be arbitrarily set depending on the reaction temperature and the like, and is usually approximately 4 to 10 hours.

The polymerization reaction is preferably performed under inert gas atmosphere such as nitrogen gas, argon gas and the like.

### 1-3. Antifouling Agent (C)

The antifouling coating composition of the present invention can contain an antifouling agent (C) other than the copper-containing substance (A) and Sea Nine. As the antifouling agent (C), zinc 2-mercaptopyridine-N-oxide (generic name: zinc pyrithione), zinc ethylenebis dithiocarbamate (generic name: Zineb), 3,4-dichlorophenyl-N-N-dimethylurea (generic name: Diuron), 2-methylthio-4-t-butylamino-6-cyclopropylamino-s-triazine (generic name: Irgarol 1051), 2-(p-chlorophenyl)-3-cyano-4-bromo-5-trifluoromethyl pyrrole (generic name : Tralopyril), (±) 4-[1-(2,3-dimethylphenyl)ethyl]-1H-imidazole (generic name : Medetomidine), N-{[dichloro(fluoro)methyl]sulfanyl}-N',N'-dimethyl-N-p-tolyl sulfamide (generic name : Tolylfluanid), pyridine triphenyl borane and the like can be mentioned.

These antifouling agents can be used alone, or two or more of these can be used in combination.

### 1-4. Other Additives

The antifouling coating composition of the present invention can contain release modifier, plasticizer, pigment, dye, defoaming agent, filler, dehydrating agent, shaking agent, organic solvent and the like as necessary to obtain an antifouling coating.

As the release modifier, for example, rosin, rosin derivative, monocarboxylic acid and salts thereof such as naphthenic acid, cycloalkenyl carboxylic acid, bicycloalkenyl carboxylic acid, versatic acid, trimethyl isobutenyl cyclohexene carboxylic acid, and metal salts thereof, or the alicyclic hydrocarbon resin can be mentioned. These can be used alone, or two or more of these can be used in combination.

As the rosin derivative, hydrogenated rosin, disproportionated rosin, maleic acid modified rosin, formylated rosin, polymerized rosin and the like can be exemplified. As the alicyclic hydrocarbon resin, for example, Quintone 1500, Quintone 1525L, and Quintone 1700 (product name, available from Zeon Corporation) and the like can be mentioned as commercially available product for example.

As the plasticizer, for example, phosphate ester, phthalate ester, adipate ester, sebacate ester, epoxidized soybean oil, alkyl vinyl ether polymer, polyalkylene glycol, t-nonyl pentasulfide, vaseline, polybutene, tris(2-ethylhexyl) trimellitate, silicone oil, modified silicone oil, paraffin mineral oil, chlorinated paraffin and the like can be mentioned. These can be used alone, or two or more of these can be used in combination.

As the filler, inorganic filler and/or organic filler can be mentioned. As the inorganic filler, for example, calcium carbonate, heavy calcium carbonate, light calcium carbonate, colloidal calcium carbonate, sedimented barium sulfate, barite powder, titanium dioxide, calcined kaolin, calcined kaolin surface-treated with aminosilane, diatom earth, aluminum hydroxide, fine-grained alumina, magnesium oxide, magnesium carbonate, zinc oxide, zinc carbonate, red oxide, iron oxide, fumed metal oxide, quartz powder, talc, zeolite, bentonite, glass fiber, carbon fiber, fine mica powder, fused silica powder, fine silica powder, fumed silica, precipitated silica, wet silica, dry silica, or hydrophobic fumed silica obtained by treating these with organosilicon compound such as methyl trichlorosilane, dimethyl dichlorosilane, hexamethyl disilazane, hexamethyl cyclotrisiloxane and okramethyl cyclotetrasiloxane, phthalocyanine blue, carbon black and the like can be mentioned. As the organic filler for example, powder of synthetic resin such as polypropylene, polyvinylchloride, polystyrene, acryl silicone and the like can be mentioned.

As the dehydrating agent, for example, calcium sulfate, synthetic zeolite based adsorbent, orthoesters, silicate such as tetramethoxysilane and tetraethoxysilane, isocyanates, carbodiimides, and carbodiimidazoles and the like can be mentioned. These dehydrating agents can be used alone, or two or more of these can be used in combination.

As the shaking agent, fatty acid amide, polyethylene oxide, silica, fumed silica and the like can be mentioned. These shaking agents can be used alone, or two or more of these can be used in combination.

As the organic solvent, for example, xylene, toluene, hexane, heptane, octane, cyclohexane, acetone, methyl ethyl ketone, methyl isobutyl ketone, diisobutyl ketone, butyl acetate, methanol, ethanol, propanol, isopropyl alcohol, isoamyl alcohol, n-butanol, 1-methoxy-2-propanol, glycol based ester, aromatic hydrocarbon, aliphatic hydrocarbon, white spirit, alicyclic hydrocarbon based solvent, naphthene based hydrocarbon, mineral spirit, aliphatic solvent naphtha, isoparaffin, normal paraffin and the like can be mentioned. These organic solvents can be used alone, or two or more of these can be used in combination.

### 2. Manufacturing Method of Antifouling Coating Composition

The antifouling coating composition of the present invention can be prepared by mixing and dispersing a mixture solution containing the copper-containing substance (A), Sea Nine, polymer (B), antifouling agent (C), and other additives, using a dispersing machine.

As the mixture solution, the one prepared by dissolving or dispersing the materials such as polymer (B) and antifouling agent and the like in a solvent is preferable. As the solvent, the ones similar as the afore-mentioned organic solvent can be used.

As the dispersing machine, the ones which can be used as a pulverizer can be suitably used. For example, a commercially available homo mixer, sand mill, bead mill, disperser, paint shaker and the like can be used. In addition, glass beads and the like for mixing and dispersing can be charged into a container equipped with an agitator, and can be used for mixing and dispersing the mixture solution.

The copper-containing substance (A) and Sea Nine can be mixed before mixing with other components. When the copper-containing substance (A) is a substance which forms a complex with Sea Nine, complex formation can be performed preferentially between the copper-containing substance (A) and Sea Nine by such advance mixing. By the complex formation, there is a possibility to improve antifouling property.

### 3. Method for Antifouling Treatment, Antifouling Coating Film and Coated Object

The antifouling treatment method of the present invention includes forming an antifouling coating film on the surface of an object subjected to coating, by using the antifouling coating composition. According to the antifouling treatment method of the present invention, the antifouling coating film gradually dissolves from the surface, so that the coating film surface is always renewed. This prevents the adhesion of aquatic fouling organisms.

As the object subjected to coating, for example, ship (especially ship bottom), fishing tool, underwater structure and the like can be mentioned.

The thickness of the antifouling coating film can be suitably selected depending on the kind of the object subjected to coating, navigation speed of the ship, temperature of sea water and the like. For example, when the object subjected to coating is a bottom of a ship, the thickness of the antifouling coating film is usually 50 to 700 µm, preferably 100 to 600 pm.

### EXAMPLE

Examples and the like are provided hereinafter in or der to further clarify characteristics of the present invention. The present invention, however, is not limited to these Examples and the like.

In each of the Production Examples, Examples, and Comparative Examples, "%" denotes "mass%". Weight average molecular weight (Mw) is a value obtained by GPC (polystyrene conversion). The conditions for GPC is as follows.
Instrument ... HLC-8320GPC, available from Tosoh Corporation
Column ···TSK gel Super HZM-M, 2 columns used
Flow ···0.35 mL/min
Detector ···RI
Temperature of Column Thermostatic Chamber ···40 °C
Eluent ···THF

The non-volatile matter content is a value measured in accordance with JIS K 5601-1-2:1999 (ISO 3251:1993) "testing methods for paint components - non-volatile matter content".

Further, the unit of the formulation amount of each component in the Tables are "g".

### 1. Production Example

### <Production Example 1 (Production of Complex (A1)>

Sea Nine (20 g, 30% xylene solution), xylene (20 g), ethanol (5.0 g), and cuprous oxide (50 g) were formulated, followed by addition of glass beads, and then the mixture was dispersed and mixed for 10 minutes using a paint shaker. The mixture solution thus obtained was subjected to FT-IR measurement to confirm formation of complex by the shift of the absorption peak derived from C=O of Sea Nine from 1664.57 cm⁻¹ to lower frequency of 1662.64 cm⁻¹. Accordingly, complex solution A1 was obtained.

### <Production Example 2 (Production of Complex (A2)>

Sea Nine (20 g, 30% xylene solution), xylene (15 g), isopropyl alcohol (5.0 g), and cuprous thiocyanate (50 g) were formulated, followed by addition of glass beads, and then the mixture was dispersed and mixed for 10 minutes using a paint shaker. The mixture solution thus obtained was subjected to FT-IR measurement to confirm formation of complex by the shift of the absorption peak derived from C=O of Sea Nine from 1664.57 cm⁻¹ to lower frequency of 1662.64 cm⁻¹. Accordingly, complex solution A2 was obtained.

### <Production Example 3 (Production of Complex (A3)>

To a four-necked flask equipped with a thermometer, condenser, stirrer and dropping funnel, Sea Nine (20 g, 30% xylene solution), xylene (15 g), 2-methoxy-1-methylethyl acetate (5 g), and copper neodecanoate (50 g) were charged. The mixture was mixed for 10 minutes at 40 °C. The mixture solution thus obtained was subjected to FT-IR measurement to confirm formation of complex by the shift of the absorption peak derived from C=O of Sea Nine from 1664.57 cm⁻¹ to lower frequency of 1662.64 cm⁻¹. Accordingly, complex solution A3 was obtained.

### <Production Example 4 (Production of Copper Acrylic Resin Solution>

To a four-necked flask equipped with a thermometer, reflux condenser and stirrer, xylene (40 g) and n-butanol (10 g) were added, and the mixture was heated to 90 °C. Further, a mixture solution of ethyl acrylate (22 g), acrylic acid (9 g), cyclohexyl acrylate (8.0 g), methoxy polyethylene glycol methacrylate (n=9, 11 g), and 1,1,3,3-tetramethylbutyl peroxy-2-ethyl hexanoate (3.0 g) was added dropwise over 3 hours, and agitation was performed for 3 hours at 90 °C. Subsequently, rosin (40 g), copper acetate (16 g), and xylene (100 g) were further added. Xylene was added while the mixture solution was subjected to reflux, thereby removing acetic acid and water generated by the reaction. Subsequently, n-butanol (20 g) was added, and the mixture was allowed to cool to room temperature, thereby obtaining the copper acrylic resin solution. The non-volatile matter content of the obtained solution was 50.7 %.

### <Production Example 5 (Production of Hydrogenated Rosin Copper Solution>

To a 1000 ml flask equipped with a thermometer, reflux condenser and stirrer, xylene solution of hydrogenated rosin (50 % solids, 400 g), Cu₂O (200 g), methanol (100 g), and glass beads (diameter of 2.5 to 3.5 mm) were added, and the mixture was agitated for 8 hours at 70 to 80 °C. Thereafter, the mixture was kept heated at 50 °C for 2 days. Subsequently, the mixture was cooled to room temperature (25 °C) and filtered, followed by distillation of methanol by vacuum concentration. Xylene was added to obtain a xylene solution of hydrogenated rosin copper salt (deep blue clear solution, approximately 50 % solids). The non-volatile matter content of the obtained hydrogenated rosin copper solution was 50.3 %.

### <Production Example 6 (Production of Copper Trimethylisobutenyl Cyclohexenecarboxylate>

To a 1000 ml flask equipped with a thermometer, reflux condenser and stirrer, trimethyl isobutenyl cyclohexene carboxylic acid (product name "A-3000", available from YASUHARA CHEMICAL CO.,LTD., 205 g), xylene (150 g), Cu₂O (200 g), ethanol (100 g), and glass beads (diameter of 2.5 to 3.5 mm) were added, and the mixture was agitated for 1 hour at 20 to 50 °C. Thereafter, the mixture was filtered, followed by distillation of methanol by vacuum concentration. Xylene was added to obtain a xylene solution of copper trimethylisobutenyl cyclohexenecarboxylate (approximately 60 % solids). The non-volatile matter content of the obtained copper trimethylisobutenyl cyclohexenecarboxylate solution was 60.1 %.

### <Production Example 7 (Production of Copolymer B1>

To a four-necked flask equipped with a thermometer, condenser, stirrer, and dropping funnel, xylene (60 g, as an initial solvent) was charged, and nitrogen gas was introduced. The reaction system was kept at 88 °C with agitation. To the reaction system, a mixture solution of monomer (a) (30 g), tetrahydrofurfuryl acrylate (3 g), 2-methoxyethyl acrylate (9 g), 2-methoxyethyl methacrylate (25 g), 2-(2-ethoxyethoxy)ethyl acrylate (2 g), methyl methacrylate (28 g), n-butyl acrylate (3 g), and 1,1,3,3-tetramethylbutyl peroxy-2-ethyl hexanoate (0.8 g, initial addition) was added dropwise over 3 hours while keeping the temperature at 88 °C. Thereafter, agitation was performed for 1 hour at 88 °C, followed by addition of 1,1,3,3-tetramethylbutyl peroxy-2-ethyl hexanoate (0.1 g, later addition) every one hour for 3 times. Agitation was further performed for 2 hours at the same temperature, followed by addition of xylene (40 g, as a diluting solvent). The reaction mixture was cooled to room temperature to obtain a copolymer solution B1. The non-volatile matter content and Mw of B1 are shown in Table 1.

### <Production Examples 8 to 14>

Monomer, polymerization initiator, and solvent shown in Table 1 were used, and polymerization reaction was performed in a similar manner as Production Example 7 under each reaction temperature conditions shown in the Table. Accordingly, copolymer solutions B2 to B8 were obtained. The non-volatile matter content and Mw of B2 to B8 are shown in Table 1. The numerical values in the Table are mass%.

**[Table 1]**

| Table 1 | | Production Example | | | | | | | |
|---|---|---|---|---|---|---|---|---|---|
| | | 7 | 8 | 9 | 10 | 11 | 12 | 13 | 14 |
| initial solvent | xylene | 60 | 38 | 49 | 42 | 73 | 73 | | 60 |
| | 2-methoxy-1-methylethyl acetate | | | | | | | 100 | 10 |
| monomer (a) | triisopropylsilyl methacrylate | 30 | 40 | 50 | 60 | 66 | 30 | | |
| | triisopropylsilyl acrylate | | | | | | 6 | | |
| monomer (b) | tetrahydrofurfuryl acrylate | 3 | | 3 | 5 | 5.5 | | | |
| | 2-methoxyethyl acrylate | 9 | 5 | 5 | 14 | 15.4 | 19 | | |
| | 2-methoxyethyl methacrylate | 25 | 35 | 15 | 10 | 11 | 24 | 45 | |
| | 2-(2-ethoxyethoxy)ethyl acrylate | 2 | | 3 | 5 | 5.5 | | | |
| | methyl methacrylate | 28 | 16 | 20 | 6 | 6.6 | 36 | 55 | 40 |
| | n-butyl acrylate | 3 | 4 | 5 | | | 5.0 | | 30 |
| | n-butvl methacrylate | | | | | | | | 30 |
| polymerization initiator | initial addition | 0.8 | 1.0 | 1.0 | 1.0 | 1.6 | 3.0 | 1.2 | 1.0 |
| | later addition 3 times | 0.1 | 0.1 | 0.1 | 0.1 | 0.1 | 0.1 | 0.2 | 0.2 |
| diluting solvent | xylene | 40 | 62 | 35 | 43 | 17 | 7 | | 30 |
| | 2-methoxy-1-methylethyl acetate | | | 10 | 5 | | | | |
| | Naphtesol 160 | | | 5 | 10 | | | | |
| | total | 200.9 | 201.1 | 201.1 | 201.1 | 201.7 | 203.1 | 201.4 | 201.2 |
| reaction temperature [°C] (within ±5°C) | | 88 | 85 | 85 | 85 | 88 | 88 | 88 | 88 |
| property of copolymer solution | non-volatile matter content [%] | 50.2 | 49.5 | 50.5 | 49.6 | 54.6 | 59.7 | 49.5 | 49.6 |
| | weight average molecular weight [Mw] | 50,000 | 49,300 | 50,400 | 47,800 | 27,400 | 21,200 | 34,400 | 45,000 |
| | name | B1 | B2 | B3 | B4 | B5 | B6 | B7 | B8 |

### <Production Example 15 (Production of Copolymer B9>

To a four-necked flask equipped with a thermometer, condenser, stirrer, and dropping funnel, Naphtesol 160 (product name, available from ENEOS Corporation, 30 g) was charged, and the reaction system was kept at 103 °C. Thereto, a mixture solution of n-butyl methacrylate (33.4 g), 2-ethylhexyl acrylate (33.4 g), and t-butyl peroxy-2-ethyl hexanoate (0.2 g) was added dropwise over 3 hours with agitation. After 1 hour of dropwise addition, NYPER-BMT-K40 (product name, available from NOF CORPORATION, 0.15 g) was added every one hour for 2 times. Agitation was further performed for 2 hours at the same temperature, followed by dilution with Naphtesol 160 (product name, available from ENEOS Corporation, 55 g). Thereafter, a mixture solution of methyl methacrylate (16 g), ethyl acrylate (7.2 g), methacrylic acid (10.2 g), and NYPER-BMT-K40 (product name, available from NOF CORPORATION, 0.8 g) was added dropwise over 3 hours with agitation. After 1 hour of dropwise addition, NYPER-BMT-K40 (product name, available from NOF CORPORATION, 0.2 g) was added every one hour for 2 times. Agitation was further performed for 2 hours at the same temperature, followed by addition of Naphtesol 160 (product name, available from ENEOS Corporation, 32 g). Thereafter, the reaction solution was cooled to room temperature to obtain the copolymer solution B9. The non-volatile matter content of B9 was 50.4 %, and Mw thereof was 67,700.

### <Production Example 16 (Production of Rosin Zinc Solution>

To a flask equipped with a thermometer, reflux condenser, and stirrer, Chinese gum rosin (WW, 240 g), and xylene (360 g) were charged. Further, zinc oxide (120 g) was added thereto such that all of the resin acids in the rosin would form zinc salts. The reaction mixture was dehydrated under reflux and reduced pressure at 70 to 80°C for 3 hours. Thereafter, the reaction mixture was cooled and filtrated to obtain a xylene solution of the rosin zinc salt (transparent dark brown solution, 50% solids). The non-volatile matter content of the solution obtained was 50.2%.

### <Production Example 17 (Production of Hydrogenated Rosin Zinc Salt Solution>

To a flask equipped with a thermometer, reflux condenser, and stirrer, Hypale CH (hydrogenated gum rosin, 240 g) and xylene (360 g) were charged. Further, zinc oxide (120 g) was added thereto such that all of the resin acids in the rosin would form zinc salts. The reaction mixture was dehydrated under reflux and reduced pressure at 70 to 80°C for 3 hours. Thereafter, the reaction mixture was concentrated, cooled and filtrated to obtain a xylene solution of the hydrogenated rosin zinc salt (dark brown solution, 65% solids). The non-volatile matter content of the solution obtained was 65.1%.

### 2. Examples and Comparative Examples (Preparation of Antifouling Coating Composition)

The complex solution and copolymer solution obtained in the afore-mentioned Production Examples were used to prepare the antifouling coating composition of Examples and Comparative Examples by the formulations shown in Table 2 to Table 5.

**[Table 2]**

| Table 2 | | Example | | | | | | | | | |
|---|---|---|---|---|---|---|---|---|---|---|---|
| | | 1 | 2 | 3 | 4 | 5 | 6 | 7 | 8 | 9 | 10 |
| polymer (B) | copolymer solution B1 | 2 | | | | 2 | | 2 | 2 | 2 | 2 |
| | copolymer solution B2 | 3 | | | | 3 | | 2 | 2 | 2 | 2 |
| | copolymer solution B3 | 6 | | 7 | | 6 | | 2 | 2 | 2 | 2 |
| | copolymer solution B4 | 6 | | | | 6 | | 2 | 2 | 2 | 2 |
| | copolymer solution B5 | | | | | | 15.5 | 2 | 2 | 2 | 2 |
| | copolymer solution B6 | | | | 10.8 | | | 2 | 2 | 2 | 2 |
| | copolymer solution B7 | | | 5 | 2 | | | 2 | 2 | 1 | 1 |
| | copolymer solution B8 | | | 5 | 2 | | | 2 | 2 | 1.4 | 1.4 |
| | copolymer solution B9 | | 17 | | | | | 2 | 2 | 2 | 2 |
| copper containing substance (A) | cuprous oxide | 18 | 12 | 13.5 | 12.5 | 11 | 9.2 | 8.5 | 2 | | 2 |
| | cuprous thiocyanate | | | 1 | | 1 | 1 | 1 | | 27 | 13.2 |
| | copper powder | | | | | 1 | 1 | 1 | | | 1 |
| | copper pyrithione | 2 | 2 | 1 | 2 | 1 | 2 | 2 | | | 2 |
| | copper bromide (I) | | | | | | | 1 | | | 1 |
| | copper acetate (II) | | | | | | | 1 | | | 1 |
| | copper neodecanoate | | | 1 | | 1 | 1 | 1 | | | 1 |
| | copper naphthenate | | | 1 | | 1 | 1 | 1 | | | 1 |
| | copper acrylic resin solution | | | 1 | | 1 | 1 | 1 | | | 1 |
| | hydrogenated rosin copper solution | | | 1 | | 1 | 1 | 1 | | | 1 |
| | copper 2-ethylhexanoate | | | 1 | | 1 | 1 | 1 | | | 1 |
| | copper trimethylisobutenyl cyclohexenecarboxylate | | | 1 | | 1 | 1 | 1 | | | 1 |
| antifouling agent (C) | SeaNine | 5.3 | 5.1 | 5.1 | 5.1 | 5.1 | 5.3 | 5.1 | 5.1 | 3.9 | 3.7 |
| | zinc pyrithione | | | 1 | | 1 | | | 2 | 1 | |
| | Zineb | | 1 | 1 | | | 1 | | 4 | | 1 |
| | Tralopyril | | 2 | 1 | | 1.5 | 3 | 1 | 1 | 1 | 3 |
| | Medetomidine | | 0.1 | 0.1 | | 0.1 | 0.1 | 0.1 | 0.1 | 0.1 | 0.1 |
| | Tolylfluanid | | | | 1 | 1 | | | 1 | | 1 |
| | Diuron | | | | 1 | | 1 | | 1 | 1 | 1 |
| | pyridine triphenyl borane | | | | 1 | | | 1 | 1 | 1 | 1 |
| | Irgarol 1051 | | | | | | 1 | | 1 | | 1 |
| copper complex (copper containing substance +Sea Nine) | complex solution A1 | | | | | | | | | | |
| | complex solution A2 | | | | | | | | | | |
| | complex solution A3 | | | | | | | | | | |
| other additive | chlorinated paraffin | 0.5 | 0.5 | 0.5 | 0.5 | 0.5 | 0.5 | 0.5 | 0.5 | 1.0 | 0.5 |
| | paraffin mineral oil | 0.5 | 0.5 | 0.5 | 0.5 | 0.5 | 0.5 | 0.5 | 0.5 | 0.5 | 1.0 |
| | tris(2-ethylhexyl) trimellitate | 1.0 | 1.0 | 0.5 | 1.0 | 0.5 | 0.5 | 0.5 | 0.5 | 0.5 | 0.5 |
| | epoxidized soybean oil | 0.5 | 0.5 | 1.0 | 0.5 | 0.5 | 1.0 | 1.0 | 1.0 | 0.5 | 0.5 |
| | rosin zinc salt solution | 2 | 2 | | 2 | | | | 2 | 2 | 1 |
| | gum rosin solution | 2.4 | 2.4 | 1 | 2.4 | 1 | 1 | 1 | 2.4 | 2.4 | |
| | hydrogenated rosin solution | 2 | 2 | 1 | 2 | 1 | 1 | 1 | 2 | 2 | 1 |
| | hydrogenated rosin zinc salt solution | 5 | 5 | 1.3 | 5 | 1.3 | 1.3 | 1.3 | 5 | 5 | 1.3 |
| | calcium sulfate | 0.5 | 0.4 | 0.5 | 0.4 | | 0.5 | 0.5 | | 0.5 | 0.5 |
| | ethyl silicate 28 | 1 | 1 | 1 | 1 | 1 | 1 | 1 | 1 | 1 | 1 |
| | zeolite | | | | | 0.5 | | | 0.4 | | 0.5 |
| | red iron oxide | 8 | 8 | 8 | 8 | 8 | 8 | 8 | 8 | 7 | 8 |
| | talc | 10.6 | 8.6 | 8.6 | 9.6 | 8.6 | 7.6 | 10.6 | 10.6 | 1 | |
| | zinc oxide | 21 | 23 | 23 | 23 | 23 | 21 | 23 | 23 | 18 | 20 |
| | titanium dioxide | 1 | 1 | 1 | 1 | 1 | 1 | 1 | 1 | 1 | 1 |
| | calcined kaolin | | | | | | | | 1 | | |
| | barium sulfate | | | | | | | | 2 | | |
| | fatty acid amide | 0.2 | 0.2 | 0.2 | 0.2 | 0.2 | 0.2 | 0.2 | 0.2 | 0.2 | 0.2 |
| | polyethylene oxide | 0.8 | 0.8 | 0.8 | 0.8 | 0.8 | 0.8 | 0.8 | 0.8 | 0.8 | 0.8 |
| organic solvent | 1-methoxy-2-propanol | | | 1 | 1 | 1 | 1.5 | 1 | | 1.2 | 1.8 |
| | xylene | 0.7 | 3.9 | 3.4 | 3.7 | 4.9 | 6.5 | 2.4 | 2 | 4.0 | 6.0 |
| total | | 100 | 100 | 100 | 100 | 100 | 100 | 100 | 100 | 100 | 100 |

**[Table 3]**

| Table 3 | | Example | | | | | | | | | |
|---|---|---|---|---|---|---|---|---|---|---|---|
| | | 11 | 12 | 13 | 14 | 15 | 16 | 17 | 18 | 19 | 20 |
| polymer (B) | copolymer solution B1 | 2 | 2 | 2 | 2 | | 3 | 2 | 2 | 13 | |
| | copolymer solution B2 | 2 | 2 | 2 | 3 | | | 2 | 3 | | |
| | copolymer solution B3 | 2 | 2 | 2 | 6 | | 10 | 2 | 2 | | |
| | copolymer solution B4 | 2 | 2 | 2 | 6 | | | 2 | 3 | | |
| | copolymer solution B5 | 2 | 2 | 2 | | | | 2 | | | |
| | copolymer solution B6 | 2 | 2 | 2 | | | | 2 | | | |
| | copolymer solution B7 | 1 | 1 | 1 | | | 2 | 1 | | 2 | |
| | copolymer solution B8 | 1.4 | 1.4 | 1.4 | | | 2 | 1.4 | | 2 | |
| | copolymer solution B9 | 2 | 2 | 2 | | 17 | | 2 | 7 | | |
| copper containing substance (A) | cuprous oxide | | 1 | 1 | | | 11 | | | 9 | |
| | cuprous thiocyanate | 3.9 | 1 | 1 | | 21 | | | 21 | | 21 |
| | copper powder | | 1 | 1 | | | 1 | | | 1 | |
| | copper pyrithione | | 1 | 1 | | | 2 | | | 2 | |
| | copper bromide (I) | | 18 | 1 | | | 1 | | | 1 | |
| | copper acetate (II) | | 1 | 22 | | | 1 | | | 1 | |
| | copper neodecanoate | | 1 | 1 | 13 | 5 | 6 | | | 1 | |
| | copper naphthenate | | 1 | 1 | | | 1 | 13 | 5 | 6 | |
| | copper acrylic resin solution | | 1 | 1 | | | 1 | | | 1 | 30 |
| | hydrogenated rosin copper solution | | 1 | 1 | | | 1 | | | 1 | |
| | copper 2-ethylhexanoate | | 1 | 1 | | | 1 | | | 1 | |
| | copper trimethylisobutenyl cyclohexenecarboxylate | | 1 | 1 | | | 1 | | | 1 | |
| antifouling agent (C) | SeaNine | 9.6 | 3.3 | 4 | 5.1 | 4 | 4 | 5.1 | 4 | 4 | 3.7 |
| | zinc pyrithione | 2 | | | 2 | 3 | | 2 | 3 | | 2 |
| | Zineb | 1 | 1 | 1 | 2 | 1 | 2 | 2 | 1 | 2 | 1 |
| | Tralopyril | 3 | 2 | 1 | 3 | 1 | 1 | 5 | 1 | 1 | 8 |
| | Medetomidine | 0.1 | 0.1 | 0.1 | 0.1 | 0.1 | 0.1 | 0.1 | 0.1 | 0.1 | 0.1 |
| | Tolylfluanid | 1 | 1 | 1 | 1 | | 1 | 1 | 1 | 1 | 1 |
| | Diuron | 1 | 1 | 1 | 1 | 1 | 1 | 1 | | 1 | 1 |
| | pyridine triphenyl borane | 1 | 1 | | 1 | | | 1 | | | 8 |
| | Irgarol 1051 | 1 | | | 1 | | | 1 | | | 1 |
| copper complex (copper containing substance +Sea Nine) | complex solution A1 | | | | | | | | | | |
| | complex solution A2 | | | | | | | | | | |
| | complex solution A3 | | | | | | | | | | |
| other additive | chlorinated paraffin | 0.5 | 1.0 | 1.0 | 0.5 | 0.5 | 0.5 | 0.5 | 1.0 | 0.5 | 1.0 |
| | paraffin mineral oil | 0.5 | 0.5 | 0.5 | 0.5 | 0.5 | 0.5 | 1.0 | 0.5 | 0.5 | 0.5 |
| | tris(2-ethylhexyl) trimellitate | 0.5 | 0.5 | 0.5 | 0.5 | 1.0 | 1.0 | 0.5 | 0.5 | 1.0 | 0.5 |
| | epoxidized soybean oil | 1.0 | 0.5 | 0.5 | 1.0 | 0.5 | 0.5 | 0.5 | 0.5 | 0.5 | 0.5 |
| | rosin zinc salt solution | 2 | 1 | 1 | 1 | 1 | 1 | 1 | 1 | 1 | |
| | gum rosin solution | 2.4 | | | | 1.2 | | | 1.2 | | |
| | hydrogenated rosin solution | 2 | 1 | 1 | 1 | 1 | 1 | 1 | 1 | 1 | |
| | hydrogenated rosin zinc salt solution | 5 | 1.3 | 1.3 | 1.3 | 2 | 1.3 | 1.3 | 2 | 1.3 | 2 |
| | calcium sulfate | 0.5 | 0.5 | 0.5 | 0.5 | | 0.5 | 0.5 | | 0.5 | 0.5 |
| | ethyl silicate 28 | 1 | 1 | 1 | 1 | 1 | 1 | 1 | 1 | 1 | 1 |
| | zeolite | | 0.4 | 0.5 | | 0.5 | | | 0.5 | | |
| | red iron oxide | 8 | 8 | 6 | 8 | 8 | 8 | 8 | 8 | 8 | 1 |
| | talc | 12 | 3 | | 6 | | 2 | 6 | | 3 | 6 |
| | zinc oxide | 20 | 18 | 14 | 20 | 20 | 20 | 20 | 20 | 20 | 2 |
| | titanium dioxide | 1 | 1 | 1 | 1 | 1 | 1 | 1 | 1 | 1 | 1 |
| | calcined kaolin | | | | | | | | | | |
| | barium sulfate | | | | | | | | | | |
| | fatty acid amide | 0.2 | 0.2 | 0.2 | 0.2 | 0.2 | 0.2 | 0.2 | 0.2 | 0.2 | 0.2 |
| | polyethylene oxide | 0.8 | 0.8 | 0.8 | 0.8 | 0.8 | 0.8 | 0.8 | 0.8 | 0.8 | 0.8 |
| organic solvent | 1-methoxy-2-propanol | | 2.5 | 2.1 | 2.5 | 1.7 | 2 | 2.1 | 1.7 | 2.0 | 2.2 |
| | xylene | 2.6 | 4.0 | 10.6 | 8.0 | 6.0 | 5.6 | 7.0 | 6.0 | 6.6 | 4.0 |
| | total | 100 | 100 | 100 | 100 | 100 | 100 | 100 | 100 | 100 | 100 |

**[Table 4]**

| Table 4 | | Example | | | | | | | | | |
|---|---|---|---|---|---|---|---|---|---|---|---|
| | | 21 | 22 | 23 | 24 | 25 | 26 | 27 | 28 | 29 | 30 |
| polymer (B) | copolymer solution B1 | | 2 | 2 | 2 | 2 | 2 | 2 | 2 | 2 | 3 |
| | copolymer solution B2 | | 2 | 2 | 2 | 2 | 2 | 2 | 3 | 2 | |
| | copolymer solution B3 | | 2 | 2 | 2 | 2 | 2 | 2 | 6 | 2 | 10 |
| | copolymer solution B4 | 2 | 2 | 2 | 2 | 2 | 2 | 2 | 6 | 2 | |
| | copolymer solution B5 | | 2 | 2 | 2 | 2 | 2 | 2 | | 2 | |
| | copolymer solution B6 | | 2 | 2 | 2 | 2 | 2 | 2 | | 2 | |
| | copolymer solution B7 | | 1 | 1 | 2 | 2 | 2 | 2 | | 1 | 2 |
| | copolymer solution B8 | | 1.4 | 1.4 | 1 | 1 | 1 | 1 | | 1.4 | 2 |
| | copolymer solution B9 | | 2 | 2 | 1 | 1 | 1 | 1 | | 2 | |
| copper containing substance (A) | cuprous oxide | 8 | | 8 | 8 | 6 | 1 | 9 | 12 | 2 | 11 |
| | cuprous thiocyanate | 1 | | 1 | 1 | 1 | 1 | 1 | | 6.5 | |
| | copper powder | 1 | | 1 | 1 | 1 | 7 | 1 | | 1 | 1 |
| | copper pyrithione | 2 | | 2 | 2 | 2 | 2 | 2.5 | 2 | 2 | 2 |
| | copper bromide (I) | 1 | | 1 | 1 | 1 | 1 | 1 | | 1 | 1 |
| | copper acetate (II) | 1 | | 1 | 1 | 1 | 1 | 1 | | 1 | 1 |
| | copper neodecanoate | 1 | | 1 | 1 | 1 | 1 | 1 | | 1 | 1 |
| | copper naphthenate | 1 | | 1 | 1 | 1 | 1 | 1 | | 1 | 1 |
| | copper acrylic resin solution | 19 | | 1 | 1 | 1 | 1 | 1 | | 1 | 1 |
| | hydrogenated rosin copper solution | 1 | 14 | 8 | 1 | 1 | 1 | 1 | | 1 | 1 |
| | copper 2-ethylhexanoate | 1 | | 1 | 6 | 1 | 1 | 1 | | 1 | 1 |
| | copper trimethylisobutenyl cyclohexenecarboxylate | 1 | | 1 | 1 | 5 | 1 | 1 | | 1 | 1 |
| antifouling agent (C) | SeaNine | 3.7 | 10 | 4.5 | 5 | 5 | 6.7 | 5.5 | 4 | 1 | 2 |
| | zinc pyrithione | 1 | 7 | | 1 | 1 | 1 | 1 | | | |
| | Zineb | 2 | 2 | 1 | 1 | 1 | 1 | 1 | | 1 | 2 |
| | Tralopyril | 2 | 10 | 1 | 7 | 7 | 6 | 3 | | 3 | 1 |
| | Medetomidine | 0.1 | 0.1 | 0.1 | 0.1 | 0.1 | 0.1 | 0.1 | | 0.1 | 0.1 |
| | Tolylfluanid | 2 | 2 | 1 | 1 | 1 | 1 | 1 | | 1 | 1 |
| | Diuron | 2 | 2 | 1 | 1 | 1 | 1 | 1 | | 1 | 1 |
| | pyridine triphenyl borane | 2 | 11 | 1 | 8 | 8 | 6 | 4 | | 1 | |
| | Irgarol 1051 | | 1 | 1 | | | | | | 1 | |
| copper complex (copper containing substance +Sea Nine) | complex solution A1 | | | | | | | | 6 | | |
| | complex solution A2 | | | | | | | | | 12 | |
| | complex solution A3 | | | | | | | | | | 9 |
| other additive | chlorinated paraffin | 1.0 | 0.5 | 1.0 | 0.5 | 0.5 | 0.5 | 0.5 | 0.5 | 0.5 | 0.5 |
| | paraffin mineral oil | 0.5 | 0.5 | 0.5 | 0.5 | 1.0 | 0.5 | 0.5 | 0.5 | 1.0 | 0.5 |
| | tris(2-ethylhexyl) trimellitate | 0.5 | 0.5 | 0.5 | 0.5 | 0.5 | 1.0 | 1.0 | 1.0 | 0.5 | 1.0 |
| | epoxidized soybean oil | 0.5 | 1.0 | 0.5 | 1.0 | 0.5 | 0.5 | 0.5 | 0.5 | 0.5 | 0.5 |
| | rosin zinc salt solution | 1 | 1 | 1 | 1 | 1 | 1 | 1 | 2 | 1 | 1 |
| | gum rosin solution | 1 | | | 1 | 1 | 1 | 1 | 2.4 | | |
| | hydrogenated rosin solution | 1 | 1 | | 1 | 1 | 1 | 1 | 2 | 1 | 1 |
| | hydrogenated rosin zinc salt solution | 1.3 | 1.3 | 1 | 0.5 | 0.5 | 0.5 | 0.5 | 5 | 1.3 | 1.3 |
| | calcium sulfate | 0.5 | 0.4 | 0.5 | | 0.5 | | 0.5 | 0.5 | 0.5 | 0.5 |
| | ethyl silicate 28 | 1 | 1 | 1 | 1 | 1 | 1 | 1 | 1 | 1 | 1 |
| | zeolite | 0.6 | | | 0.5 | | 0.5 | | | 0.5 | |
| | red iron oxide | 6 | 4 | 8 | 2 | 3 | 3 | 6 | 8 | 8 | 8 |
| | talc | 10 | 3 | 4 | 9 | 10 | 10 | 10 | 10.6 | | 2 |
| | zinc oxide | 10 | 1 | 20 | 1 | 3 | 10 | 10 | 23 | 20 | 20 |
| | titanium dioxide | 1 | 1 | 1 | 1 | 1 | 1 | 1 | 1 | 1 | 1 |
| | calcined kaolin | 1 | | | | 1 | | 1 | | | |
| | barium sulfate | 1 | | | 1 | | 1 | | | | |
| | fatty acid amide | 0.2 | 0.2 | 0.2 | 0.2 | 0.2 | 0.2 | 0.2 | 0.2 | 0.2 | 0.2 |
| | polyethylene oxide | 0.8 | 0.8 | 0.8 | 0.8 | 0.8 | 0.8 | 0.8 | 0.8 | 0.8 | 0.8 |
| organic solvent | 1-methoxy-2-propanol | 2.0 | | 2.0 | 2.4 | 2.4 | 2.4 | 1.4 | | 1.2 | 1 |
| | xylene | 4.3 | 7.3 | 4.0 | 10.0 | 9.0 | 6.3 | 8.0 | | 4.0 | 4.6 |
| total | | 100 | 100 | 100 | 100 | 100 | 100 | 100 | 100 | 100 | 100 |

**[Table 5]**

| Table 5 | | Comparative Example | | | | | | | | |
|---|---|---|---|---|---|---|---|---|---|---|
| | | 1 | 2 | 3 | 4 | 5 | 6 | 7 | 8 | 9 |
| polymer (B) | copolymer solution B1 | 2 | 2 | 2 | | 3 | | 2 | 2 | 2 |
| | copolymer solution B2 | 2 | 3 | 2 | | | | 2 | 2 | 2 |
| | copolymer solution B3 | 2 | 6 | 2 | | 10 | | 2 | 2 | 2 |
| | copolymer solution B4 | 2 | 6 | 2 | | | 2 | 2 | 2 | 2 |
| | copolymer solution B5 | 2 | | 2 | | | | 2 | 2 | 2 |
| | copolymer solution B6 | 2 | | 2 | | | | 2 | 2 | 2 |
| | copolymer solution B7 | 2 | | 1 | | 2 | | 1 | 2 | 1 |
| | copolymer solution B8 | 2 | | 1.4 | | 2 | | 1.4 | 1 | 1.4 |
| | copolymer solution B9 | 2 | | 2 | 17 | | | 2 | 1 | 2 |
| copper containing substance (A) | cuprous oxide | | 18 | | 13 | 11 | 8 | 8 | 9 | 30 |
| | cuprous thiocyanate | | | 28 | | | 1 | 1 | 1 | |
| | copper powder | | | | | 1 | 1 | 1 | 1 | |
| | copper pyrithione | | 2 | | 2 | 2 | 2 | 2 | 3.5 | 2 |
| | copper bromide (I) | | | | | 1 | 1 | 1 | 1 | |
| | copper acetate (II) | | | | | 1 | 1 | 1 | 1 | |
| | copper neodecanoate | | | | | 6 | 1 | 1 | 1 | |
| | copper naphthenate | | | | | 1 | 1 | 1 | 1 | |
| | copper acrylic resin solution | | | | | 1 | 19.3 | 1 | 1 | |
| | hydrogenated rosin copper solution | | | | | 1 | 1 | 8 | 1 | |
| | copper 2-ethylhexanoate | | | | | 1 | 1 | 1 | 1 | |
| | copper trimethylisobutenyl cyclohexenecarboxylate | | | | | 1 | 1 | 1 | 1 | |
| antifouling agent (C) | SeaNine | 4 | | | | | | | | 4 |
| | zinc pyrithione | 2 | | 1 | | | 1 | | 1 | |
| | Zineb | 4 | | | 1 | 2 | 2 | 1 | 1 | |
| | Tralopyril | 1 | | 1 | 2 | 1 | 2 | 1 | 3 | |
| | Medetomidine | 0.1 | | 0.1 | 0.1 | 0.1 | 0.1 | 0.1 | 0.1 | |
| | Tolylfluanid | 1 | | | | 1 | 2 | 1 | 1 | |
| | Diuron | 1 | | 1 | | 1 | 2 | 1 | 1 | |
| | pyridine triphenyl borane | 1 | | 1 | | | 2 | 1 | 4 | |
| | Irgarol 1051 | 1 | | | | | | 1 | | |
| copper complex (copper containing substance +Sea Nine) | complex solution A1 | | | | | | | | | |
| | complex solution A2 | | | | | | | | | |
| | complex solution A3 | | | | | | | | | |
| other additive | chlorinated paraffin | 0.5 | 0.5 | 1.0 | 0.5 | 0.5 | 1.0 | 1.0 | 0.5 | 0.5 |
| | paraffin mineral oil | 0.5 | 0.5 | 0.5 | 0.5 | 0.5 | 0.5 | 0.5 | 0.5 | 0.5 |
| | tris(2-ethylhexyl) trimellitate | 0.5 | 1.0 | 0.5 | 1.0 | 1.0 | 0.5 | 0.5 | 1.0 | 1.0 |
| | epoxidized soybean oil | 1.0 | 0.5 | 0.5 | 0.5 | 0.5 | 0.5 | 0.5 | 0.5 | 0.5 |
| | rosin zinc salt solution | 2 | 2 | 2 | 2 | 1 | 1 | 1 | 1 | 2 |
| | gum rosin solution | 2.4 | 2.4 | 2.4 | 2.4 | | 1 | | 1 | 2.4 |
| | hydrogenated rosin solution | 2 | 2 | 2 | 2 | 1 | 1 | | 1 | 2 |
| | hydrogenated rosin zinc salt solution | 5 | 5 | 5 | 5 | 1.3 | 1.3 | 1 | 0.5 | 5 |
| | calcium sulfate | | 0.5 | 0.5 | 0.4 | 0.5 | 0.5 | 0.5 | 0.5 | 0.5 |
| | ethyl silicate 28 | 1 | 1 | 1 | 1 | 1 | 1 | 1 | 1 | 1 |
| | zeolite | 0.4 | | | | | 0.6 | | | |
| | red iron oxide | 8 | 8 | 7 | 8 | 8 | 6 | 8 | 6 | 6 |
| | talc | 10.6 | 12.1 | 1 | 8.6 | 3.5 | 11 | 5.5 | 10 | 5.5 |
| | zinc oxide | 25.6 | 21 | 18 | 23 | 20 | 10 | 20 | 12 | 16 |
| | titanium dioxide | 1 | 1 | 1 | 1 | 1 | 1 | 1 | 1 | 1 |
| | calcined kaolin | 1 | | | | | 1 | | 1 | |
| | barium sulfate | 2 | | | | | 1 | | | |
| | fatty acid amide | 0.2 | 0.2 | 0.2 | 0.2 | 0.2 | 0.2 | 0.2 | 0.2 | 0.2 |
| | polyethylene oxide | 0.8 | 0.8 | 0.8 | 0.8 | 0.8 | 0.8 | 0.8 | 0.8 | 0.8 |
| organic solvent | 1-methoxy-2-propanol | | | 0.9 | | 1 | 2 | 1 | 1.4 | |
| | xylene | 2.4 | 4.5 | 7.2 | 8.0 | 9.1 | 6.7 | 8 | 10.5 | 2.7 |
| total | | 100 | 100 | 100 | 100 | 100 | 100 | 100 | 100 | 100 |

The details of the components in Table 2 to Table 5 are as follows.

### <Copper-Containing Substance (A)>

cuprous oxide: product name "NC-301" (available from NISSIN CHEMCO)
cuprous thiocyanate (I): product name "cuprous thiocyanate (I)" (available from FUJIFILM Wako Pure Chemical Corporation)
copper powder: product name "STANDART Lac E 900 Copper Powder" (available from ECKART GmbH)
copper pyrithione: product name "copper Omadine" (available from Lonza Group AG)
copper bromide (I): (available from FUJIFILM Wako Pure Chemical Corporation)
copper acetate: product name "copper acetate (II)" (available from FUJIFILM Wako Pure Chemical Corporation)
copper neodecanoate: product name "copper neodecanoate (Cu5%)" (available from Nihon Kagaku Sangyo Co., Ltd.)
copper naphthenate: product name "copper naphthenate (Cu10%)" (available from FUJIFILM Wako Pure Chemical Corporation)
copper acrylic resin solution: the one prepared in Production Example 4 was used
hydrogenated rosin copper solution: the one prepared in Production Example 5 was used
copper 2-ethylhexanoate: product name "copper 2-ethylhexanoate" (available from FUJIFILM Wako Pure Chemical Corporation)
copper trimethylisobutenyl cyclohexenecarboxylate (approximately 60% xylene solution): the one prepared in Production Example 6 was used

### <Antifouling Agent (C)>

Sea Nine: product name "Sea Nine 211" (30% solids, xylene solution, available from Rohm and Haas Company)
zinc pyrithione: product name "zinc Omadine" (available from Lonza Group AG)
Zineb: product name "Zineb" (available from Sigma-Aldrich, Inc.)
Tralopyril: product name "Econea" 4-bromo-2-(4-chlorophenyl)-5-(trifluoromethyl)-1H-pyrrole-3-carbonitrile (available from JANSSEN PMP)
Medetomidine: "selektope" "4-[1-(2,3-dimethylphenyl)ethyl]-1H-imidazole (available from I-Tech AB)
Tolylfluanid: product name "Preventol A 5-S" (available from Lanxess AG)
Diuron: product name "Diuron" (available from TOKYO CHEMICAL INDUSTRY CO., LTD.)
pyridine triphenyl borane: product name "PK" (available from HOKKO CHEMICAL INDUSTRY CO.,LTD.)
Irgarol 1051: product name "Irgarol 1051" N-cyclopropyl-N'-tert-butyl-6-(methylthio)-1,3,5-triazine-2,4-diamine (available from BASF Corporation)

### <Other Additives>

chlorinated paraffin: product name "Enpara A-40S" (available from Tosoh Corporation)
paraffin mineral oil: product name "Pure Safety 68" (available from COSMO OIL LUBRICANTS CO., LTD)
tris(2-ethylhexyl) trimellitate: product name "tris(2-ethylhexyl) trimellitate" (available from TOKYO CHEMICAL INDUSTRY CO., LTD.)
epoxidized soybean oil: product name "Sansocizer E-2000H" (manufactured by New Japan Chemical Co., Ltd.)
rosin zinc salt solution: the one prepared in Production Example 16 was used
gum rosin solution: xylene solution of Chinese gum rosin (WW) 50% solids
hydrogenated rosin solution: xylene solution of "Hypale CH" (product name, available from ARAKAWA CHEMICAL INDUSTRIES, LTD.) 50% solids
hydrogenated rosin zinc salt solution: the one prepared in Production Example 17 was used
calcium sulfate: product name "NP3D" sulfate hemihydrite (available from NORITAKE CO., LIMITED)
ethyl silicate 28: tetra ethoxy silane: product name "ethyl silicate 28" (available from COLCOAT CO., LTD.)
zeolite: product name "molecular sieve 4A" (available from UNION SHOWA K.K.)
red iron oxide: bengara product name "KINGYOKU A-TYPE" (available from MORISHITA BENGARA KOGYO CO., LTD)
talc: product name "Talc MS" (available from NIPPON TALC Co.,Ltd.)
zinc oxide: product name "zinc oxide II" (available from Seido Chemical Industry Co., Ltd.)
titanium dioxide: product name "FR-41" (available from FURUKAWA CO., LTD.)
calcined kaolin: product name "kaolin 90" (available from Toyokasei Co., Ltd.)
barium sulfate: product name "TS-2" (available from Takehara Kagaku Kogyo Co., Ltd.)
fatty acid amide: product name "DisparlonA603-20X" fatty acid amide (20% solids, xylene solution, available from Kusumoto Chemicals, Ltd.)
polyethylene oxide: product name "Disparlon4200-20" polyethylene oxide (20% solids, xylene solution, available from Kusumoto Chemicals, Ltd.)
1-methoxy-2-propanol: (available from KISHIDA CHEMICAL Co., Ltd.)
xylene: contains 20 to 65% ethylbenzene

### 3. Measurement of Solids of Coating Composition

The solids (mass solids) of the coating composition obtained in Examples and Comparative Examples is mass of solids with respect to total mass of the coating composition. The mass of the solids was calculated by the following method. In accordance with ISO 3251, 1 g of sample was measured in a flat-bottomed tin plate with a diameter of 75 mm and a height of 5 mm, and the mass of the residue was measured after heating at 105°C for 1 hour using a dryer equipped with a forced-air exhaust system. Measurement was performed twice, and average value of the two results was taken as the mass of the solids. Results are shown in Table 6 to Table 9.

### 4. Calculation of Copper Content in the Solids of Coating Composition

The copper content in the solids of the coating composition obtained in Examples and Comparative Examples was calculated by (copper content of coating composition)/(solids of coating composition). The copper content of the coating composition is a ratio of the mass of copper atom with respect to total mass of the coating composition. The mass of copper atom can be calculated by adding up the mass of copper atom of each components contained in the coating composition. Results are shown in Table 6 to Table 9.

### 5. Test Example 1 (Measurement of Coating Viscosity)

In accordance with JIS K 5600, viscosity (KU) of the coating composition obtained in the Examples and Comparative Examples at 25 °C was measured using a Stoma viscometer, product name "CAP1000+" (manufactured by AMETEK Brookfield). Further, viscosity at 25 °C (Pa·s) was measured using a Cone plate viscometer, product name "KU-2" (manufactured by AMETEK Brookfield). Evaluation was made by the following criteria. Results are shown in Table 6 to Table 9.

### Stoma viscometer (KU)

A: 80 to 100
B: 100 to 120
X: 120 or more

### Cone plate viscometer (Pa ·s)

A: 2 to 8
B: 8 to 10
X: 10 or more

### 6. Text Example 2 (Antifouling Test)

Antifouling coating composition obtained by Examples and Comparative Examples were applied on a hard vinyl chloride plate (110 × 60 × 2 mm) so that the dried film thickness would be 200 pm. The coating composition was dried at room temperature for 3 days, thereby preparing the test plate. The test plate was immersed at 2.0 m below sea level in Osaka Bay and Ise Bay where adhesion of fouling organisms is severe for 12 months, and the test plate fouling due to attached objects was examined after 6 months and 12 months.

Evaluation was made in accordance with the following criteria by visual observation of the condition of the coating film surface. The results are shown in Table 6 to Table 9.

A: Fouling organisms such as shellfish or algae do not attach, and slime do not attach.
B: Fouling organisms such as shellfish or algae do not attach, and slime attaches.
C: Fouling organisms such as shellfish or algae attach partially.
X: Fouling organisms such as shellfish or algae attach entirely.

### 7. Discussion

All of the antifouling coating compositions of the Examples had low viscosity, and showed superior long-term antifouling property in the antifouling test. On the other hand, all of the antifouling coating compositions of Comparative Examples had high viscosity. In addition, all of the antifouling coating compositions of the Comparative Examples 1 to 8 showed inferior long-term antifouling property than the Examples.

**[Table 6]**

| Table 6 | | | Example | | | | | | | | | |
|---|---|---|---|---|---|---|---|---|---|---|---|---|
| | | | 1 | 2 | 3 | 4 | 5 | 6 | 7 | 8 | 9 | 10 |
| property | solids of coating composition (%) | | 80.5 | 77.5 | 79.5 | 79.9 | 77.5 | 76.3 | 79.3 | 79.3 | 77.7 | 76.2 |
| | copper content in solids (%) | | 20.4 | 14.3 | 17.2 | 14.4 | 16.1 | 14.5 | 14.2 | 2.3 | 18.1 | 15.6 |
| test example 1 viscosity | Stoma viscosity (KU) | | A | A | A | A | A | A | A | A | B | B |
| | Cone & plate viscosity (Pa·s) | | A | A | A | A | A | A | A | A | B | B |
| test example 2 antifouling test | Osaka Bay | 6 months | A | A | A | A | A | A | A | A | A | A |
| | | 12 months | A | A | A | A | A | A | A | A | A | A |
| | Ise Bay | 6 months | A | A | A | A | A | A | A | A | A | A |
| | | 12 months | A | A | A | A | A | A | A | A | A | A |

**[Table 7]**

| Table 7 | | | Example | | | | | | | | | |
|---|---|---|---|---|---|---|---|---|---|---|---|---|
| | | | 11 | 12 | 13 | 14 | 15 | 16 | 17 | 18 | 19 | 20 |
| property | solids of coating composition (%) | | 79.3 | 78.3 | 71.6 | 74.4 | 77.2 | 79.1 | 78.4 | 77.2 | 75.1 | 76.0 |
| | copper content in solids (%) | | 2.5 | 14.8 | 16.5 | 2.7 | 15.3 | 17.4 | 2.6 | 15.3 | 16.0 | 15.5 |
| test example 1 viscosity | Stoma viscosity (KU) | | B | B | B | A | A | A | A | A | A | B |
| | Cone & plate viscosity (Pa·s) | | B | B | B | A | A | A | A | A | A | B |
| test example 2 antifouling test | Osaka Bay | 6 months | A | A | A | A | A | A | A | A | A | A |
| | | 12 months | A | A | A | A | A | A | A | A | A | A |
| | Ise Bay | 6 months | A | A | A | A | A | A | A | A | A | A |
| | | 12 months | A | A | A | A | A | A | A | A | A | A |

**[Table 8]**

| Table 8 | | | Example | | | | | | | | | |
|---|---|---|---|---|---|---|---|---|---|---|---|---|
| | | | 21 | 22 | 23 | 24 | 25 | 26 | 27 | 28 | 29 | 30 |
| property | solids of coating composition (%) | | 75.6 | 67.8 | 75.1 | 68.7 | 70.2 | 73.7 | 73.9 | 79.8 | 76.4 | 82.4 |
| | copper content in solids (%) | | 14.9 | 4.6 | 16.5 | 17.0 | 14.4 | 14.4 | 16.0 | 17.4 | 15.6 | 16.7 |
| test example 1 viscosity | Stoma viscosity (KU) | | B | A | A | B | A | A | A | A | B | A |
| | Cone & plate viscosity (Pa·s) | | B | A | A | B | A | A | A | A | B | A |
| test example 2 antifouling test | Osaka Bay | 6 months | A | A | A | A | A | A | A | A | A | A |
| | | 12 months | A | A | A | A | A | A | A | A | A | A |
| | Ise Bay | 6 months | A | A | A | A | A | A | A | A | A | A |
| | | 12 months | A | A | A | A | A | A | A | A | A | A |

**[Table 9]**

| Table 9 | | | Comparative Example | | | | | | | | |
|---|---|---|---|---|---|---|---|---|---|---|---|
| | | | 1 | 2 | 3 | 4 | 5 | 6 | 7 | 8 | 9 |
| property | solids of coating composition (%) | | 79.6 | 80.5 | 77.5 | 77.0 | 76.4 | 75.6 | 75.2 | 75.2 | 80.1 |
| | copper content in solids (%) | | 0.0 | 20.4 | 17.9 | 15.6 | 18.1 | 14.9 | 16.5 | 16.0 | 33.8 |
| test example 1 viscosity | Stoma viscosity (KU) | | X | X | X | X | X | X | X | X | X |
| | Cone & plate viscosity (Pa·s) | | X | X | X | X | X | X | X | X | X |
| test example 2 antifouling test | Osaka Bay | 6 months | X | X | X | X | X | X | X | X | A |
| | | 12 months | X | X | X | X | X | X | X | X | A |
| | Ise Bay | 6 months | X | X | X | X | X | X | X | X | A |
| | | 12 months | X | X | X | X | X | X | X | X | A |

## Claims

1. An antifouling coating composition, comprising: a copper-containing substance (A) and 4,5-dichloro-2-octyl-4-isothiazolin-3-one; wherein:
a copper content in solids of the antifouling coating composition is 21 mass% or less.

2. The antifouling coating composition of Claim 1, further comprising polymer (B).

3. The antifouling coating composition of Claim 2, wherein:
the polymer (B) is a copolymer of monomer (a) and ethylenically unsaturated monomer (b) other than the monomer (a);
the monomer (a) is represented by the general formula (1);
content of the monomer (a) with respect to total mass of the monomer (a) and the monomer (b) is 1 to 80 mass%. 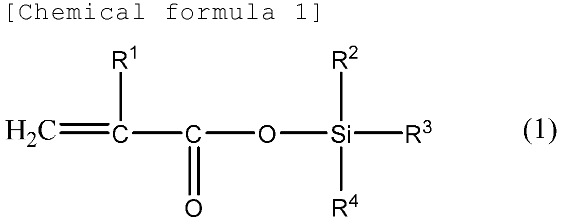 (wherein, R¹ represents hydrogen or methyl group; R², R³, R⁴ are each the same or different from each other and represents branched alkyl group having 3 to 8 carbon atoms or phenyl group)
